# EUROPEAN PATENT APPLICATION

(11) **EP 4 712 120 A1**
(43) Date of publication of application: **18.03.2026**
(21) Application number: 24815441.1
(22) Date of filing: 27.05.2024
(51) Int. Cl.: H01F 41/02, H01F 27/24, H01F 27/245

(54) **APPARATUS AND METHOD FOR MANUFACTURING LAMINATED CORE**

(30) Priority: 26.05.2023 JP 2023087245
(71) Applicant: Nippon Steel Corporation, Tokyo 100-8071 (JP)
(72) Inventor: ARAMAKI, Takashi, Tokyo 100-8071 (JP)
(74) Representative: Vossius & Partner Patentanwälte Rechtsanwälte mbB
(86) International application number: PCT/JP2024/019372
(87) International publication number: WO 2024/247958

(57) **Abstract**

A production apparatus 100 includes a punch 12, a blanking die 14 arranged below the punch 12, a first holding part 16 arranged below the blanking die 14, a second holding part 18 arranged below the first holding part 16 and formed of a separate member from the first holding part 16, and a heating part 20 arranged around the second holding part 18 below the first holding part 16. A plurality of core sheets 1a is cut out from a steel strip 1 by the punch 12 and the blanking die 14, an outer peripheral portion of a plurality of core sheets 1a, which has been cut out, is pressurized laterally by the first holding part 16 and the plurality of core sheets 1a is pressurized downward by the punch 12, and the plurality of core sheets 1a pressurized downward by the punch 12 is heated by the heating part 20 while being held in the second holding part 18.

## Description

### TECHNICAL FIELD

The present invention relates to a production apparatus and a production method for a laminated core.

### BACKGROUND ART

Laminated cores constructed of a plurality of electrical steel sheets stacked together have conventionally been used for cores of rotating electrical machines or the like. As one of production methods for a laminated core, there has been known a method for producing a laminated core by cutting out a core sheet of a predetermined shape from a steel strip with adhesive applied thereon and causing an obtained plurality of core sheets to adhere together.

For example, in a production method for a laminated iron core disclosed in Patent Document 1, an iron core sheet is cut out from a strip-like steel sheet and pushed into a blanking die by a blanking punch. The iron core sheet pushed into the blanking die is stacked on a previously cut iron core sheet and sequentially pushed into a squeeze ring below the blanking die. The iron core sheets pushed into the squeeze ring are tightly fit together by moving while being pressed against the inner peripheral surface of the squeeze ring. At this time, the adhesive between iron core sheets is cured by being heated by a heater, so that a laminated iron core with a predetermined number of iron core sheets fixed together is formed.

### LIST OF PRIOR ART DOCUMENTS

Patent Document 1: JP2009-297758A

### SUMMARY OF INVENTION

### TECHNICAL PROBLEM

The method disclosed in Patent Document 1 makes it possible to continuously achieve cutting out of an iron core sheet by the blanking die and pressurization and heating of a plurality of iron core sheets in the squeeze ring. In this way, it is possible to efficiently produce a laminated iron core.

However, as a result of studies conducted by the inventors, it has been revealed that when pressurization and heating of a plurality of iron core sheets occur concurrently as described above, a compressive residual stress may be generated in obtained laminated iron cores and iron loss may increase.

Accordingly, an objective of the present invention is to provide a production apparatus for a laminated core and a production method capable of inhibiting the occurrence of iron loss.

### SOLUTION TO PROBLEM

A production apparatus according to an embodiment of the present invention is
an apparatus of producing a laminated core by cutting out a plurality of core sheets from a steel strip with an adhesive layer on a surface of the steel strip and causing an obtained plurality of core sheets to adhere together, the production apparatus for a laminated core comprising:
a punch;
a blanking die arranged below the punch;
a first holding part arranged below the blanking die;
a second holding part arranged below the first holding part, the second holding part formed of a separate member from the first holding part; and
a heating part arranged around the second holding part below the first holding part, wherein
a plurality of core sheets is cut out from a steel strip by the punch and the blanking die,
an outer peripheral portion of the plurality of core sheets, which has been cut out, is pressurized laterally by the first holding part and the plurality of core sheets is pressurized downward by the punch, and
the plurality of core sheets pressurized downward by the punch is heated by the heating part while being held in the second holding part.

Furthermore, a production method according to an embodiment of the present invention is performed in a production apparatus including:
a punch; a blanking die arranged below the punch; a first holding part arranged below the blanking die; a second holding part arranged below the first holding part, the second holding part formed of a separate member from the first holding part; and a heating part arranged around the second holding part below the first holding part, the method comprising:
cutting out a plurality of core sheets from a steel strip with an adhesive layer on a surface of the steel strip by the punch and the blanking die;
pressurizing an outer peripheral portion of the plurality of core sheets, which has been cut out, laterally by the first holding part and pressurizing the plurality of core sheets downward by the punch; and
heating the plurality of core sheets pressurized downward by the punch by the heating part while being held in the second holding part.

The adhesive layer may be a thermosetting adhesive layer.

The first holding part and the second holding part may be connected with a connecting part in between.

A length of the first holding part in an up-down direction may be 5 mm or more.

The punch may pressurize the plurality of core sheets with a pressurizing force of 2.0 MPa or less.

The heating part may include an infrared heating device.

### ADVANTAGEOUS EFFECTS OF INVENTION

According to the present invention, the occurrence of iron loss in the laminated core can be inhibited.

### BRIEF DESCRIPTION OF DRAWINGS

[Figure 1] Figure 1 is a schematic sectional view illustrating a production apparatus for a laminated core according to an embodiment of the present invention.
[Figure 2] Figure 2 is an enlarged sectional view illustrating a surface of a steel strip and its vicinity.
[Figure 3] Figure 3 is a diagram for describing a production method for a laminated core according to an embodiment of the present invention.
[Figure 4] Figure 4 is a diagram for describing a production method for a laminated core according to an embodiment of the present invention.
[Figure 5] Figure 5 is a diagram for describing a production method for a laminated core according to an embodiment of the present invention.
[Figure 6] Figure 6 is a diagram illustrating a modification of the production apparatus.

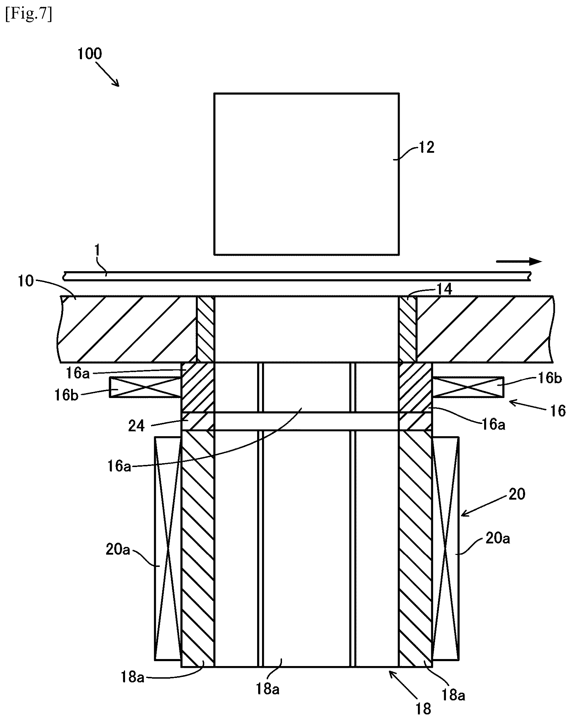

[Figure 7] Figure 7 is a diagram illustrating another modification of the production apparatus.
[Figure 8] Figure 8 is a diagram illustrating still another modification of the production apparatus.

### DESCRIPTION OF EMBODIMENTS

A production apparatus and a production method for a laminated core according to embodiments of the present invention will now be described with reference to drawings.

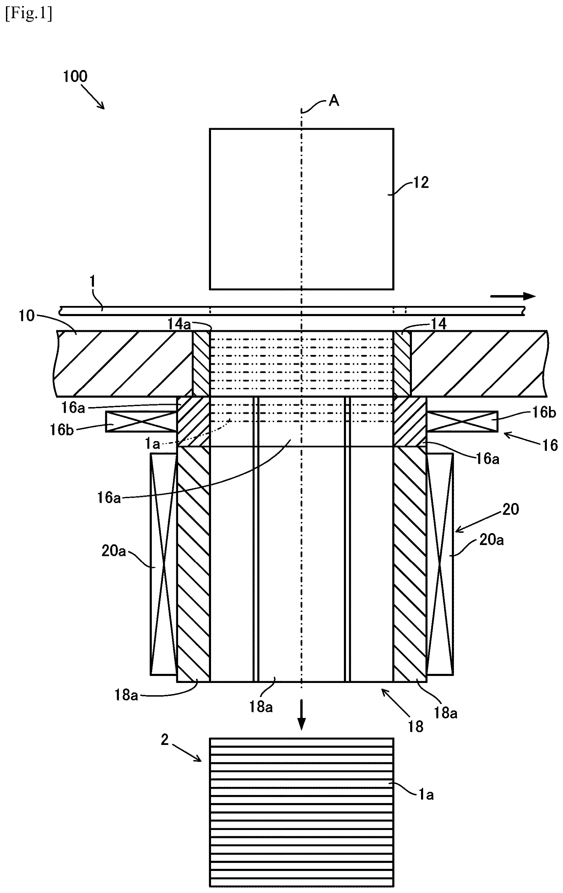

Figure 1 is a schematic sectional view illustrating a production apparatus for a laminated core according to an embodiment of the present invention. A production apparatus 100 is an apparatus of producing a laminated core 2 by cutting out a plurality of core sheets 1a from a steel strip 1 conveyed in a predetermined direction and causing an obtained plurality of core sheets 1a to adhere together. In the embodiment, the laminated core 2 has, for example, a cylindrical shape and is for use as a stator core for a rotating electrical machine. The laminated core 2 may be a laminated core for use as a rotor core for a rotating electrical machine. Furthermore, the laminated core 2 may be a split core. Furthermore, the laminated core 2 may be a core for other devices than the rotating electrical machine.

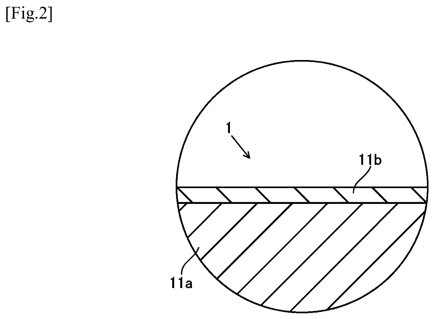

Hereinunder, the steel strip 1 will briefly be described, and thereafter, the production apparatus 100 will be described in detail. Figure 2 is an enlarged sectional view illustrating a surface of the steel strip 1 and its vicinity.

As illustrated in Figure 2, the steel strip 1 includes a base steel sheet 11a and an adhesive layer 11b. In the embodiment, a non-oriented electrical steel sheet is used for the base steel sheet 11a, whereas an oriented electrical steel sheet may be used for the base steel sheet 11a. Note that, in the specification, the electrical steel sheet refers to a base metal portion (base steel sheet) excluding insulating films and the like. The adhesive layer 11b is formed on a surface of the base steel sheet 11a. In the embodiment, the adhesive layer 11b is formed on each of opposite surfaces of the base steel sheet 11a, whereas the adhesive layer 11b may be formed only on one surface of the base steel sheet 11a.

The chemical composition of the base steel sheet 11a contains basic elements and optional elements as necessary with the balance being Fe and impurities. In the embodiment, the chemical composition of the base steel sheet 11a contains, for example, in mass %, Si: 1.0 to 4.5%, Al: 0.1 to 1.5%, and Mn: 0.2 to 4.0% as basic elements.

The adhesive layer 11b is formed to cover the surface of the base steel sheet 11a entirely. Thermosetting resin may be used as the adhesive layer 11b. In the embodiment, in addition to a bonding capability, the adhesive layer 11b has an insulating capability. In the embodiment, the adhesive layer 11b is, for example, an insulating film that contains epoxy resin and an epoxy resin curing agent.

As such epoxy resin, epoxy resin with two or more epoxide groups per molecule can be used, for example. Such epoxy resin includes, for example, bisphenol A type epoxy resin, bisphenol F type epoxy resin, phenol novolac type epoxy resin, cresol novolac type epoxy resin, alicyclic epoxy resin, glycidyl ester type epoxy resin, glycidyl amine type epoxy resin, hydantoin type epoxy resin, isocyanurate type epoxy resin, acrylic acid-modified epoxy resin (epoxy acrylate), phosphorus-containing epoxy resin, and their halogenated derivatives (such as brominated epoxy resin) or hydrogen additives, and the like. As such epoxy resin, one type of resin may be used alone or two or more types of resin may be used in combination.

Epoxy resin curing agents include, for example, aromatic polyamines, acid anhydrides, phenolic curing agents, dicyandiamide, boron trifluoride-amine complexes, organic acid hydrazides, and the like. Aromatic polyamines include, for example, m-phenylenediamine, diaminodiphenylmethane, diaminodiphenyl sulfone, and the like. Phenolic curing agents include, for example, phenol novolac resin, cresol novolac resin, bisphenol novolac resin, triazine-modified phenol novolac resin, phenol resol resin, and the like. As such an epoxy resin curing agent, a phenolic curing agent is preferable and phenol resol resin is more preferable. As such an epoxy resin curing agent, one type of agent may be used alone or two or more types of agent may be used in combination.

Although not described in detail, still another insulating film may be formed between the base steel sheet 11a and the adhesive layer 11b. As substances constituting the insulating film, for example, (1) inorganic compounds, (2) organic resin, and (3) a mixture of an inorganic compound and organic resin are applicable. Inorganic compounds include, for example, (1) complex of dichromate and boric acid, (2) complex of phosphate and colloidal silica, (3) phosphates, (4) Zr compounds, and (5) Ti compounds. Organic resin includes, for example, epoxy resin, acrylic resin, acrylic-styrene resin, polyester resin, silicone resin, and fluororesin.

### (Configuration of Production Apparatus)

Next, the production apparatus 100 will be described in detail. As illustrated in Figure 1, the production apparatus 100 according to the embodiment includes a base part 10, a punch 12, a blanking die 14, a first holding part 16, a second holding part 18, and a heating part 20. Although not illustrated, in the production apparatus 100, the steel strip 1 is subjected to predetermined blanking processing (such as forming a slot) by using another punch and die upstream of the punch 12 and the blanking die 14 in a conveying direction of the steel strip 1.

The punch 12 is arranged above the base part 10 in an extendable and retractable manner in the up-down direction. The blanking die 14 is arranged below the punch 12. The blanking die 14 has a tubular shape corresponding to the external shape of the laminated core 2. In the embodiment, an opening edge 14a on an upper end side of the blanking die 14 functions as a cutting edge. In the embodiment, the opening edge 14a has a circular shape. In the embodiment, the steel strip 1 conveyed in a predetermined direction is repeatedly subjected to blanking by the punch 12 and the blanking die 14, so that a plurality of core sheets 1a is cut out from the steel strip 1.

In Figure 1, a virtual line A extending in the up-down direction passing through the center of the opening edge 14a of the blanking die 14 is indicated by a dashed line. Hereinunder, the radial direction refers to a direction that is perpendicular to the virtual line A. Hereinunder, circumferential direction refers to the direction of circumference of a virtual circle around the center of the opening edge 14a when viewed from above.

The first holding part 16 is arranged below the blanking die 14. In the embodiment, the first holding part 16 is fixed to the base part 10 by using an attaching member (not illustrated). In the embodiment, the first holding part 16 includes a plurality of holding members 16a and a plurality of pressing devices 16b.

The holding members 16a are arranged in line in the circumferential direction. Each holding member 16a is provided to be moveable in the radial direction. The pressing devices 16b each are provided for each holding member 16a. The pressing device 16b is a device for moving the holding member 16a in the radial direction. In the embodiment, the pressing device 16b includes, for example, a hydraulic device to move the pressing device 16b in the radial direction by oil pressure.

Note that it is sufficient that the first holding part 16 is configured to pressurize a plurality of core sheets 1a cut out by the punch 12 and the blanking die 14 laterally (from radially outside). Accordingly, for example, any holding member 16a of the holding members 16a may be fixed to be immovable in the radial direction. In this case, no pressing device 16b may be connected to the fixed holding member 16a. Note that the configuration of the first holding part is not limited to the above-described example, and a variety of known squeeze ring configurations may be used to form the first holding part.

The second holding part 18 is arranged below the first holding part 16. The second holding part 18 is formed of a separate member from the first holding part 16. In the embodiment, the second holding part 18 is provided coaxially with the first holding part 16. In the embodiment, the second holding part 18 includes a plurality of holding members 18a provided to be moveable in the radial direction. Although not illustrated, each holding member 18a is provided with an urging device. In the embodiment, the urging device includes, for example, an elastic member such as a spring to urge the holding member 18a radially inward (toward the virtual line A). Note that the configuration of the second holding part is not limited to the above-described example, and a variety of known squeeze ring configurations may be used to form the second holding part.

The heating part 20 is arranged around the second holding part 18 below the first holding part 16. In the embodiment, the heating part 20 includes a plurality of heating devices 20a. For example, an infrared heating device is used as the heating device 20a. In the embodiment, the heating device 20a is provided for each holding member 18a. Note that the configuration of the heating part 20 is not limited to the above-described example, and various heating devices capable of heating the core sheet 1a held by the second holding part 18 (holding member 18a) or the second holding part 18 may be used as the heating part. For example, a high frequency induction heating device provided around the second holding part 18 may be used as the heating part.

### (Production Method for Laminated Core)

Next, a production method for the laminated core 2 by using the production apparatus 100 is described above. In the embodiment, while the steel strip 1 is being delivered from a coil (hoop material) (not illustrated) in a predetermined direction by a delivering mechanism (such as rollers) (not illustrated), a plurality of core sheets 1a is cut out from the steel strip 1 by the punch 12 and the blanking die 14 (the opening edge 14a).

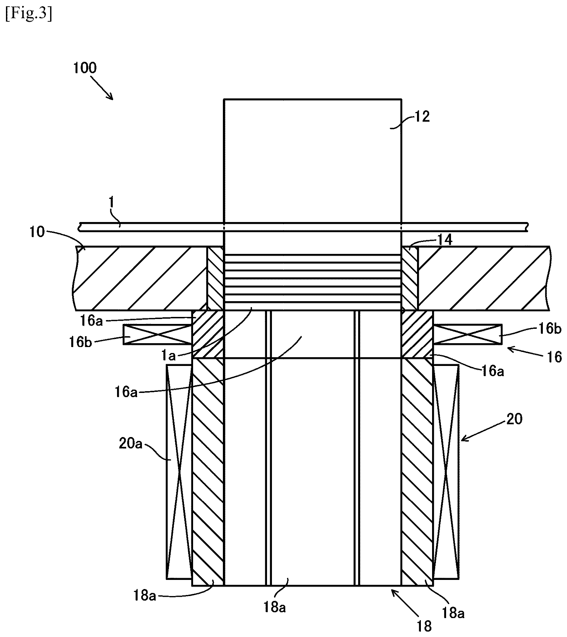

As illustrated in Figure 3, a plurality of core sheets 1a, which has been cut out, is sequentially stacked in the blanking die 14. Note that while the outer peripheral portion of the core sheet 1a cut out from the steel strip 1 comes into contact with the inner peripheral surface of the blanking die 14, in the embodiment, a large pressure is not applied to the core sheet 1a from the blanking die 14. Accordingly, the core sheet 1a cut out from the steel strip 1 by the punch 12 and the blanking die 14 (the opening edge 14a) is not held by the inner peripheral surface of the blanking die 14 and moves downward in the blanking die 14.

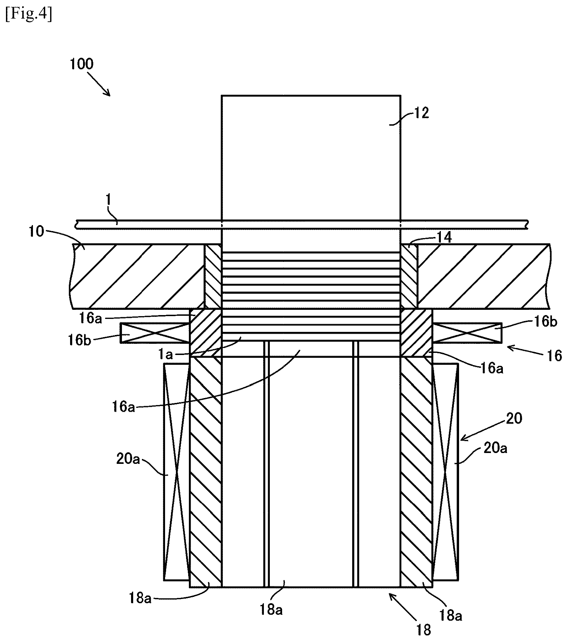

As illustrated in Figure 4, the core sheet 1a is additionally cut out from the steel strip 1, so that the core sheets 1a are sequentially pushed into the first holding part 16. In the embodiment, each time the core sheet 1a is newly cut out by the punch 12 and the blanking die 14, the core sheet 1a is pushed one by one from within the blanking die 14 into the first holding part 16.

As described above, the first holding part 16 is configured to be able to pressurize the core sheet 1a laterally (from radially outside). In the embodiment, a plurality of core sheets 1a is kept pressurized laterally in the first holding part 16. Accordingly, a pressure generated between adjacent core sheets 1a in up-down direction because the punch 12 pressurizes a plurality of core sheets 1a downward can be maintained in the first holding part 16. Accordingly, a plurality of core sheets 1a is pressurized in the up-down direction, so that adjacent base steel sheets 11a in the up-down direction are press-bonded together with the adhesive layer 11b in between in the first holding part 16. In the embodiment, a pressure larger than a pressure generated between adjacent core sheets 1a in the up-down direction due to the own weight of a plurality of core sheets 1a can be generated and maintained between adjacent core sheets 1a in the up-down direction in the first holding part 16. Note that adjacent core sheets 1a in the up-down direction, which are pressurized in the first holding part 16, are fixed together by a force (adhesion force) weaker than that on the core sheet 1a subjected to heating and pressurization in the second holding part 18 described later. That is, adjacent core sheets 1a in the up-down direction in the first holding part 16 are caused to adhere together (temporary adhesion). Note that the pressurizing force from the punch 12 to a plurality of core sheets 1a is preferably set to 2.0 MPa or less and is preferably closer to a pressure required to cut out the core sheet 1a (blanking pressure: for example, on the order of 0.1 MPa). The pressurizing force may, for example, be set to 1.8 MPa or less or may be set to 1.0 MPa or less. It may be set to 0.1 MPa or more. Furthermore, the pressurizing force from the first holding part 16 (in the embodiment, holding member 16a) to the outer peripheral portion of the core sheet 1a is, for example, set to the extent that the core sheet 1a can be prevented from falling off. In the embodiment, the pressurizing force is set such that a static friction force generated between the core sheet 1a and the first holding part 16 is larger than the weight of the core sheet 1a.

As described above, a large pressure is not applied from the inner peripheral surface of the blanking die 14 to the core sheet 1a. Accordingly, even when a pressure is generated between adjacent core sheets 1a in the up-down direction in the blanking die 14 because the punch 12 pressurizes a plurality of core sheets 1a downward, the state is not maintained. In this way, the core sheets 1a are not press-bonded together in the blanking die 14.

As described above, the core sheet 1a is provided with a thermosetting adhesive layer 11b. In the embodiment, the temperature of the first holding part 16 is adjusted at least at the upper end portion in the first holding part 16 such that the adhesive layer 11b is not softened. For example, in the first holding part 16, the temperature of the first holding part 16 is adjusted such that softening of the adhesive layer 11b between the paired adjacent base steel sheets 11a in the up-down direction is prevented before the paired base steel sheet 11a are press-bonded. More specifically, for example, the first holding part 16 may hold a plurality of core sheets 1a at a temperature lower than the softening temperature of the adhesive layer 11b. In a case in which a plurality of core sheets 1a is held at a temperature lower than the softening temperature of the adhesive layer 11b in the first holding part 16, it is possible to reduce a compressive residual stress to be generated in a resultant laminated core and inhibit an increase in iron loss even when pressurization and heating of a plurality of core sheets 1a occur concurrently. The holding temperature for a plurality of core sheets 1a in the first holding part 16 can be, for example, a temperature lower than the softening temperature of the adhesive layer 11b by 10°C or more, and it may be a temperature lower than the softening temperature of the adhesive layer 11b by 30°C or more. The lower limit of the holding temperature in the first holding part 16 is not particularly limited, whereas, for example, it may be 0°C or more or on the order of a room temperature (20°C) or more, and may be 40°C or more. Note that the holding temperature (temperature of the adhesive layer 11b) of a plurality of core sheets 1a in the first holding part 16 can be measured by a thermocouple thermometer or a radiation thermometer embedded in the first holding part 16. In the embodiment, based on the holding temperature (temperature of the adhesive layer 11b) as measured as described above, output control of the heating part 20 may be performed, as well as other actions such as adjustment of the length of the first holding part 16 in the up-down direction or provision of a thermal insulator at the boundary between the first holding part 16 and the second holding part 18 may be performed such that the temperature of the core sheet 1a (the adhesive layer 11b) in the first holding part 16 falls below the softening temperature. Furthermore, through a heating test of the heating part 20 in advance, the temperature rise behavior of the adhesive layer 11b heated by the heating part 20 may be simulated. Then, output control of the heating part 20 may be performed based on the temperature rise behavior of the adhesive layer 11b obtained by the simulation. While the temperature in the first holding part 16 may be affected and rise by the temperature in the second holding part provided in continuous to the first holding part 16, it is possible to control the temperature in the first holding part 16 below the softening temperature of the adhesive layer 11b in a way as described above. Note that, in the embodiment, it is sufficient that the holding temperature in the first holding part 16 is less than the softening temperature of the adhesive layer 11b, and operational advantages of the embodiment are not affected by the presence or absence of the heating part in the first holding part 16 nor whether the core sheet 1a is intentionally heated or not. On the other hand, from the viewpoint of further reducing a compressive residual stress to be generated in the core sheet 1a, it is preferable to inhibit a plurality of core sheets 1a from being heated in the first holding part 16. For example, it is preferable that the heating part 20 is not provided in the first holding part 16 for simplification of the apparatus and further reduction of a compressive residual stress to be generated in the core sheet 1a. Accordingly, in the embodiment, the heating part 20 is positioned below a lower end portion of the first holding part 16.

From the viewpoint of inhibiting temperature rise of the upper end portion of the first holding part 16 due to heating of the heating part 20, the length of the first holding part 16 in the up-down direction (more specifically, the length of a portion brought into contact with the core sheet 1a: in the embodiment, the length of the holding member 16a) is preferably 5 mm or more and preferably 10 mm or more. In this case, in the first holding part 16, it is possible to appropriately press bond the core sheets 1a before the adhesive layer 11b is softened. Although not particularly limited, it is sufficient that the upper limit of the length of the first holding part 16 in the up-down direction is, for example, 160 mm or less, and it may be 20 mm or less.

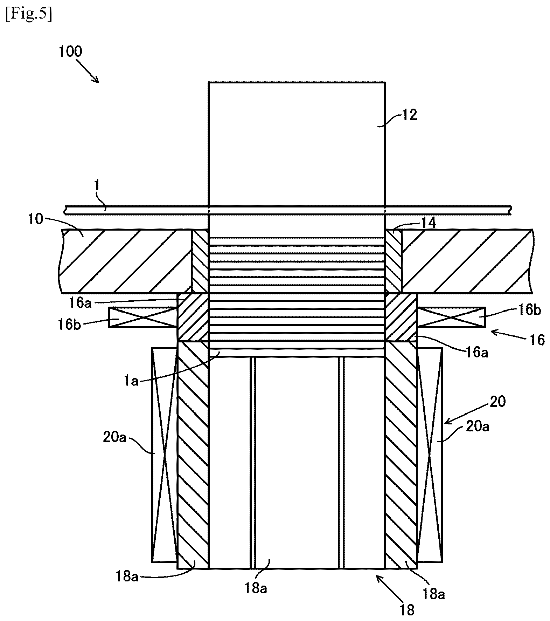

As illustrated in Figure 5, the core sheet 1a is additionally cut out from the steel strip 1, so that a plurality of core sheets 1a is sequentially pushed into the second holding part 18. In the embodiment, each time the core sheet 1a is newly cut out by the punch 12 and the blanking die 14, the core sheet 1a is pushed one by one from the first holding part 16 into the second holding part 18.

The core sheet 1a pushed into the second holding part 18 is heated by the heating part 20 and pressurized by the punch 12 while being held laterally (from radially outside) by the second holding part 18 (a plurality of holding members 18a). In the embodiment, a plurality of core sheets 1a is heated by the heating part 20, leading to softening and curing of the adhesive layer 11b of each core sheet 1a in the second holding part 18. This allows a plurality of core sheets 1a to be fixed together in the second holding part 18. Furthermore, the core sheets 1a are pushed one by one into the second holding part 18 from the lower side and heated in order from the one pushed into the second holding part 18. Accordingly, the stacked core sheets 1a are sequentially heated from the one located at the lower side to the one located at the upper side, so that they are heated gradually from the lower side. In the embodiment, the heating part 20 heats the second holding part 18 such that the temperature of the adhesive layer 11b rises to a temperature higher than or equal to the softening temperature in the second holding part 18. Furthermore, in the embodiment, the pressurizing force laterally from the second holding part 18 to the laminated core 2 is set to the extent that the laminated core 2 can be prevented from falling off. In the embodiment, the pressurizing force is set such that a static friction force generated between the laminated core 2 and the second holding part 18 is larger than the weight of the laminated core 2. Note that it is sufficient that the heating temperature in the second holding part 18 is a temperature higher than or equal to the softening temperature of the adhesive layer 11b, whereas, for example, it may be a temperature higher than the softening temperature of the adhesive layer 11b by 10°C or more or may be a temperature higher than the softening temperature of the adhesive layer 11b by 40°C or more. While the upper limit of the heating temperature in the second holding part 18 is not particularly limited, for example, it may be 200°C or less. Furthermore, in a case in which the adhesive that forms the adhesive layer 11b is thermosetting resin, the heating part 20 heats a plurality of core sheets 1a held by the second holding part 18 to a temperature higher than or equal to the curing temperature of the adhesive layer 11b.

In a case in which an infrared heating device is used as the heating part 20, it is possible to increase the temperature of each core sheet 1a gradually from the outer peripheral portion toward the center. This allows the adhesive layer 11b of each core sheet 1a to be cured gradually from the outer peripheral portion toward the center. In this case, it is possible to prevent the adhesive from leaking between the base steel sheets 11a that are adjacent up and down in the second holding part 18. From such a viewpoint, it is preferable to use an infrared heating device as the heating part 20. In the embodiment, for example, an infrared heating device that radiates near infrared rays with a wavelength of 750 to 1000 nm is used.

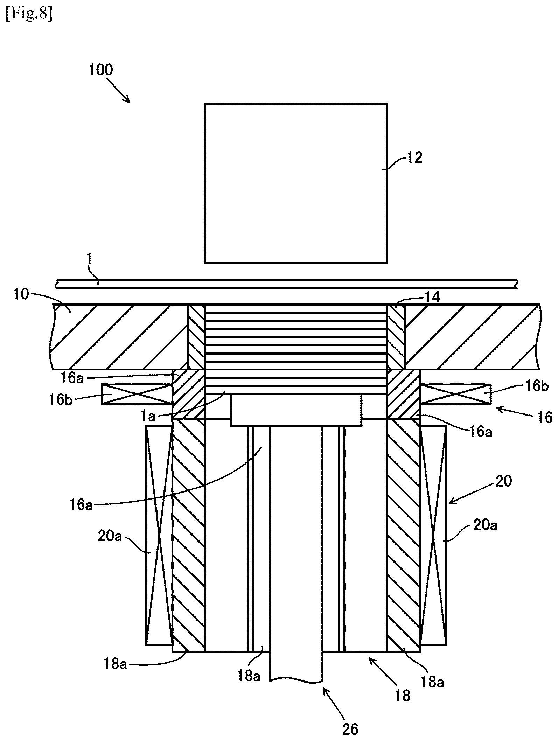

Finally, as illustrated in Figure 1, a plurality of core sheets 1a fixed together in the second holding part 18 is discharged from the second holding part 18 as the laminated core 2. In this way, the laminated core 2 is produced. Note that, in the embodiment, the thickness of the core sheet 1a (the steel strip 1) is, for example, 0.1 mm to 0.5 mm, and the mass of the laminated core 2 is, for example, 0.1 kg to 6.0 kg. To produce a larger laminated core 2, for example, the laminated core 2 that has a mass greater than 6.0 kg, there may be a case in which it is difficult to hold the laminated core 2 only by a force of the urging device provided to the second holding part 18. In such a case, as illustrated in Figure 8 described later, it is preferable to support the laminated core 2 from below by a support device 26.

### (Advantageous Effects of the Embodiment)

In the production apparatus 100 according to the embodiment, when heating a plurality of core sheets 1a held in the second holding part 18 by the heating part 20, the second holding part 18 is also heated. The first holding part 16 is provided above the second holding part 18, and the temperature of the first holding part 16 would also rise due to heat transfer from the second holding part 18 to the first holding part 16.

However, in the production apparatus 100 according to the embodiment, the first holding part 16 and the second holding part 18 are formed of a separate member from each other, and therefore, heat transfer from the second holding part 18 to the first holding part 16 can be inhibited. In this way, it is possible to sufficiently inhibit the temperature of the first holding part 16 (the holding member 16a) from becoming higher than or equal to the softening temperature of the adhesive layer 11b. In other words, it is possible to prevent the adhesive layer 11b from being softened before adjacent core sheets 1a in the up-down direction in the first holding part 16 is pressurized. As a result, it is possible to reduce a compressive residual stress to be generated in the core sheet 1a by pressurization and heating of a plurality of core sheets 1a.

Here, as a result of detailed studies conducted by the inventors, it has been revealed that in a case in which heating and pressurization are started concurrently on a plurality of core sheets 1a at a temperature higher than or equal to the softening temperature of the adhesive layer 11b, a residual stress in a compression direction (residual stress acting radially inward) is generated in the core sheet 1a. Specifically, in a case in which heating and pressurization of the core sheet 1a are started concurrently, softening of the adhesive layer 11b between paired adjacent core sheets 1a in the up-down direction progresses before the paired core sheet 1a is pressurized. In this case, a residual stress is likely to be generated in the base steel sheet 11a in the compression direction due to the difference in the amount of thermal expansion between the adhesive layer 11b and the base steel sheet 11a above or below the adhesive layer 11b and due to the contraction of the adhesive layer 11b.

On the other hand, it has been revealed that in a case in which the core sheets 1a that are adjacent up and down are pressurized while being held at a temperature lower than the softening temperature of the adhesive layer 11b in advance, and thereafter the core sheets 1a that are adjacent up and down are heated and pressurized to adhere together at a temperature higher than or equal to the softening temperature of the adhesive layer 11b, it is possible to reduce a compressive residual stress to be generated in the core sheet 1a by pressurization and heating. Furthermore, in a case in which the core sheets 1a pressurized in the up-down direction are heated in order from the core sheet 1a on the lower side, the adhesive layer 11b and the base steel sheets 11a above and below the adhesive layer 11b expand and contract in such a way that they follow one another. In this case, a residual stress can further be inhibited from being generated in the base steel sheet 11a in the compression direction. Accordingly, in the production apparatus 100 according to the embodiment, as described above, the first holding part 16 and the second holding part 18 are formed of a separate member from each other to inhibit heat transfer from the second holding part 18 to the first holding part 16 and inhibit temperature rise of the first holding part 16. Furthermore, the core sheets 1a are heated and pressurized at a temperature higher than or equal to the softening temperature of the adhesive layer 11b in the second holding part 18 to cause the core sheets 1a to adhere and be fixed together. In this way, it is possible to prevent the adhesive layer 11b from being softened before adjacent core sheets 1a in the up-down direction are pressurized in the first holding part 16. As a result, a residual stress can be inhibited from being generated in the base steel sheet 11a in the compression direction in the first holding part 16, so that the iron loss of the laminated core 2 can be reduced. Furthermore, in the production apparatus 100 according to the embodiment, the blanking die 14, the first holding part 16, and the second holding part 18 are arranged continuously in the up-down direction. In such a configuration, the core sheets 1a pushed to the lower side by the punch 12 are heated one by one in order from the lower side in the second holding part 18 to a temperature higher than or equal to the softening temperature of the adhesive layer 11b. In the second holding part 18, the core sheets 1a are heated gradually from the lower side to a temperature higher than or equal to the softening temperature of the adhesive layer 11b, so that it is possible to reduce a compressive residual stress to be generated in each base steel sheet 11a and to further reduce the iron loss of the laminated core 2.

In general, to obtain a laminated core with an appropriate shape, it is necessary to apply a large pressure greater than 2.0 MPa from the punch to a plurality of core sheets and to cure the adhesive layer. However, in this case, a frictional force between the adhesive layer and the base steel sheet increases and a compressive residual stress is generated in the base steel sheet, leading to an increase in the iron loss. In contrast, in the embodiment, a plurality of core sheets 1a is heated while the outer peripheral portion of a plurality of core sheets 1a is held (in the embodiment, pressurized) laterally in the second holding part 18. In this way, it is possible to cure the adhesive layer 11b between the core sheets 1a (base steel sheets 11a) without applying a large pressure to a plurality of core sheets 1a in a stacked direction. In this case, an increase in a frictional force between the adhesive layer 11b and the base steel sheet 11a can be prevented and a compressive residual stress can sufficiently be inhibited from being generated in the base steel sheet 11a. In this way, even when a pressurizing force from the punch 12 to a plurality of core sheets 1a is as low as 2.0 MPa or less, it is possible to cause a plurality of core sheets 1a to appropriately adhere together and to obtain the laminated core 2 with an appropriate shape.

### (Modification)

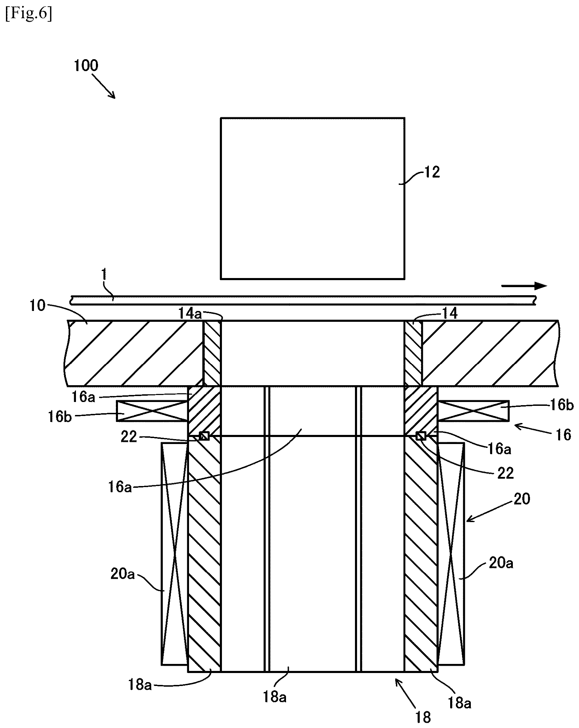

In the above-described embodiment, the first holding part 16 and the second holding part 18 are provided independently from each other, whereas as illustrated in Figure 6, the first holding part 16 and the second holding part 18 may be connected with each other by a plurality of connecting parts 22. In this case, it is possible to link the first holding part 16 and the second holding part 18 together, so that the configurations of the first holding part 16 and the second holding part 18 (the configurations for pressing the holding member 16a and the holding member 18a) can be simplified. The connecting part 22 may be a recess and a projection formed in the holding member 16a and holding member 18a. In this case, for example, the holding member 16a and the holding member 18a can be fixed by the recess and the projection rivetted together. The connecting part 22 may be a fastening member such as a bolt and a nut.

In the above-described embodiment, the second holding part 18 is arranged immediately under the first holding part 16, the first holding part 16 and the second holding part 18 may be connected with a thermal insulating member 24, which has a lower thermal conductivity than the holding member 18a (a portion in the second holding part 18 brought into contact with the core sheet 1a), in between. In this case, heat transfer from the second holding part 18 to the first holding part 16 can sufficiently be inhibited and temperature rise of the first holding part 16 can sufficiently be prevented. Note that, in the embodiment, the thermal insulating member 24 constitutes a connecting part that connects the first holding part 16 and the second holding part 18.

In the above-described embodiment, a plurality of core sheets 1a is supported by pressurizing a plurality of core sheets 1a laterally in the first holding part 16 and the second holding part 18, whereas as illustrated in Figure 8, a plurality of core sheets 1a may further be supported by the support device 26 from below. In this way, it is possible to support a plurality of core sheets 1a more stably. The support device 26 is a device for supporting a plurality of core sheets 1a from below, for example, hydraulically or by an elastic force of an elastic member such as a spring.

### INDUSTRIAL APPLICABILITY

According to the present invention, it is possible to produce a laminated core with low iron loss.

### REFERENCE SIGNS LIST

1: steel strip
2: laminated core
10: base part
12: punch
14: blanking die
16: first holding part
18: second holding part
20: heating part
22: connecting part
24: thermal insulating member
26: support device

## Claims

1. An apparatus of producing a laminated core by cutting out a plurality of core sheets from a steel strip with an adhesive layer on a surface of the steel strip and causing an obtained plurality of core sheets to adhere together, the production apparatus for a laminated core comprising:
a punch;
a blanking die arranged below the punch;
a first holding part arranged below the blanking die;
a second holding part arranged below the first holding part, the second holding part formed of a separate member from the first holding part; and
a heating part arranged around the second holding part below the first holding part, wherein
a plurality of core sheets is cut out from a steel strip by the punch and the blanking die,
an outer peripheral portion of the plurality of core sheets, which has been cut out, is pressurized laterally by the first holding part and the plurality of core sheets is pressurized downward by the punch, and
the plurality of core sheets pressurized downward by the punch is heated by the heating part while being held in the second holding part.

2. The production apparatus according to claim 1, wherein the adhesive layer is a thermosetting adhesive layer.

3. Th production apparatus according to claim 1 or 2, wherein the first holding part and the second holding part are connected with a connecting part in between.

4. The production apparatus according to any of claims 1 to 3, wherein a length of the first holding part in an up-down direction is 5 mm or more.

5. The production apparatus according to any of claims 1 to 4, wherein the heating part includes an infrared heating device.

6. A production method for a laminated core performed in a production apparatus including: a punch; a blanking die arranged below the punch; a first holding part arranged below the blanking die; a second holding part arranged below the first holding part, the second holding part formed of a separate member from the first holding part; and a heating part arranged around the second holding part below the first holding part, the method comprising:
cutting out a plurality of core sheets from a steel strip with an adhesive layer on a surface of the steel strip by the punch and the blanking die;
pressurizing an outer peripheral portion of the plurality of core sheets, which has been cut out, laterally by the first holding part and pressurizing the plurality of core sheets downward by the punch; and
heating the plurality of core sheets pressurized downward by the punch by the heating part while being held in the second holding part.

7. The production method according to claim 6, wherein the adhesive layer is a thermosetting adhesive layer.

8. The production method according to claim 6 or 7, wherein the first holding part and the second holding part are connected with a connecting part in between.

9. The production method according to any of claims 6 to 8, wherein a length of the first holding part in an up-down direction is 5 mm or more.

10. The production method according to any of claims 6 to 9, wherein the punch pressurizes the plurality of core sheets with a pressurizing force of 2.0 MPa or less.

11. The production method according to any of claims 6 to 10, wherein the heating part includes an infrared heating device.
